# EUROPEAN PATENT APPLICATION

(11) **EP 1 990 141 A1**
(43) Date of publication of application: **12.11.2008**
(21) Application number: 07768209.4
(22) Date of filing: 05.07.2007
(51) Int. Cl.: B26B 19/48

(54) **SHAVER CLEANER AND SHAVER SYSTEM**

(30) Priority: 14.07.2006 JP 2006193607
(71) Applicant: Matsushita Electric Works, Ltd, Kadoma-shi, Osaka 571-8686 (JP)
(72) Inventor: KITAMURA, Hiroyasu, Kadoma-shi Osaka 571-8686 (JP)
(74) Representative: Rutetzki, Andreas
(86) International application number: PCT/JP2007/063460
(87) International publication number: WO 2008/007605

(57) **Abstract**

In a cleaner 2, a fuel cell 51 is provided as a power supply and power generated by the fuel cell 51 is used for driving a pump 25 which pumps up ethanol 22 as cleaning liquid to a cleaning pan 21 or a fan 28 for drying, and also used for charging a shaver 1. Since the cleaner 2 is not required to be installed in a water section unlike a conventional cleaner, a selection range of storage place of the shaver 1 can be widened; since power supply wiring is not required, troublesomeness due to power supply wiring is eliminated and convenience is enhanced furthermore. Heat of the fuel cell 51 is introduced through a heat pipe 30 to the blade edge 11 and used for drying it, thus enhancing energy utilization efficiency of the fuel cell 51.

## Description

### Technical Field

The present invention relates to a shaver cleaner for cleaning off hair and skin tissues adhered to the blade edge of a shaver, and a shaver system comprising the aforementioned shaver cleaner in conjunction with the shaver.

### Background Art

A shaver cleaner such as described above is shown in for example Patent Documents 1 and 2. In those conventional arts, there is proposed a cleaner which performs cleaning of the aforementioned blade edge by continuously supplying a cleaning liquid which is filtered by a filter, and thereafter performs drying as well. As a result of using such a cleaner, although shavers used to be stored near a water section such as a washroom to perform washing with water, it is made possible to store the shaver at any place such as a living room and a bed room, away from the water section, thereby improving convenience.

In the aforementioned conventional arts, the freedom of the installation location has been increased. However, for example, a wash stand is provided with shelves for placing beauty products such as a shaver and also with receptacles for supplying power, and therefore is suitable as the storage location for the aforementioned cleaner and shaver. Thus, when the storage location is changed, new problems may arise. For example, if there is no receptacle nearby, an extension cable is needed, and power supply wiring may be displeasing in appearance. Further, there is a risk of tripping over the power supply wiring and thereby overturning the whole cleaner. As a result, not only the equipment may be damaged, but also the cleaning liquid may be scattered.
Patent Document 1: Japanese Patent No. 3652393.
Patent Document 2: Japanese Patent Laid-Open No. 2004-243112.

### Disclosure of the Invention

It is an object of the invention to provide a shaver cleaner and shaver system, which enables to eliminate the troublesomeness due to power supply wiring, thereby further enhancing the convenience.

The shaver cleaner of the present invention comprises a fuel cell, which supplies power at least to a cleaning part for cleaning the shaver, and the heat from which is directed to a drying part for drying the shaver after cleaning. The shaver system of the present invention comprises this shaver cleaner.

Since the shaver cleaner and shaver system as configured above comprises a fuel cell thereby eliminating the need of power supply wiring, it becomes possible to eliminate the troublesomeness due to the power supply wiring and to further enhance its convenience. Further, since the heat from the fuel cell is used for drying the shaver after cleaning, it becomes possible to increase the energy utilization efficiency in the fuel cell.

### Brief Description of the Drawings

Figure 1 shows the configuration of the shaver system relating to a first embodiment of the present invention;
Figure 2 is a block diagram to show a configuration example of the circuit block of the cleaner in the shaver system shown in Figure 1;
Figure 3 shows the configuration of the shaver system relating to a second embodiment of the present invention;
Figure 4 is a block diagram to show a configuration example of the circuit block of the cleaner in the shaver system shown in Figure 3;
Figure 5 shows the configuration of the shaver system relating to a third embodiment of the present invention;
Figure 6 is a block diagram to show a configuration example of the circuit block of the cleaner in the shaver system shown in Figure 5; and
Figure 7 shows the configuration of the shaver system relating to a fourth embodiment of the present invention.

### Best Mode for Carrying Out the Invention

Hereinafter, embodiments relating to the present invention will be described with reference to the drawings. It is noted that like configurations are given like symbols in each figure, and description thereof will be omitted.

### [Embodiment 1]

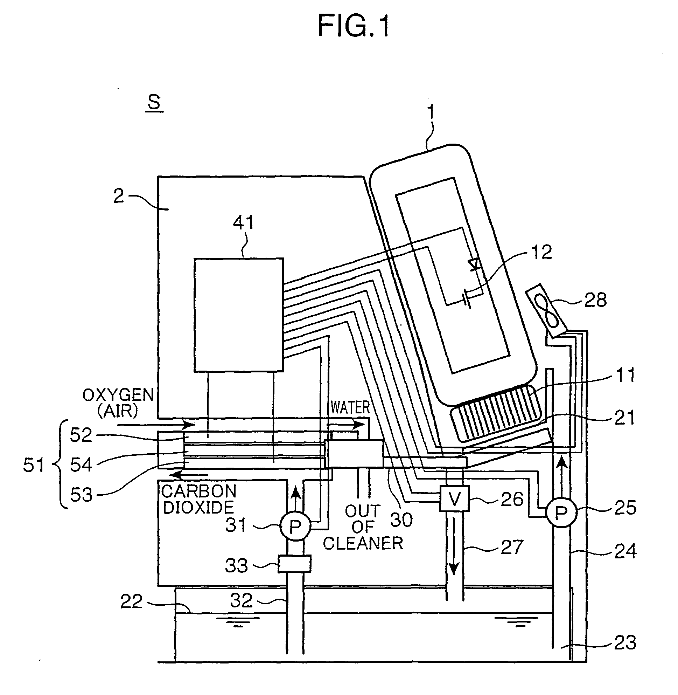

Figure 1 shows the configuration of the shaver system relating to a first embodiment of the present invention. In Figure 1, a shaver system S includes to comprise a shaver 1 and a cleaner 2.

The cleaner 2 is an apparatus which, when the shaver 1 is mounted onto a cleaning pan 21 which is a predetermined mounting location, can clean and dry a blade edge 11 of the shaver 1 and thereafter charge a built-in battery 12.

In the bottom part of the cleaner 2, a cartridge 23 which retains ethanol 22 as the cleaning liquid is installed. The ethanol 22 in the cartridge 23 is sucked up through a conduit 24 by a pump 25, and supplied to the cleaning pan 21 so that the blade edge 11 can be cleaned while being soaked in the ethanol 22. While being cleaned, the blade edge 11 of the shaver 1 may be appropriately vibrated. After cleaning is finished, the ethanol 22 is dropped into the cartridge 23 through a conduit 27 as a result of a valve 26 being opened. The bottom face of the cleaning pan 21 is sloped toward an intake port of the conduit 27. Beard debris is deposited into the bottom part of the cartridge 23. In view of preventing the deposited beard debris from being captured, the conduit 24 is arranged such that a suction port in the conduit 24 is spaced apart by a predetermined distance from the bottom face of the cartridge 23. As a result of this, as described below, it becomes easy to use the ethanol 22, which is the cleaning liquid, as the fuel. After cleaning is finished, a blower 28 is driven to dry the blade edge 11.

It should be noted in the present embodiment that the cleaner 2 comprises a fuel cell 51, which generates power to be used by the cleaner 2, and waste heat produced as the result of the power generation by the fuel cell 51 is conducted to the cleaning pan 21 through a heat pipe 30 and is used for heating the blade edge 11. Therefore, in the present embodiment, the cleaning pan 21, the pump 25, and the like constitute a cleaning part, the cleaning pan 21, the blower 28, and the like constitute a drying part, and the heat pipe 30 constitutes a heat transfer part. The aforementioned heat pipe 30 is placed in a meandering manner on the back side of the cleaning pan 21, which is made of a material of high heat conductivity such as aluminum, to improve heat propagation.

The aforementioned fuel cell 51 is made up of an electrolytic membrane 54 sandwiched by a cathode 52 and an anode 53. This fuel cell 51 uses ethanol 22 similar to the cleaning liquid as fuel. The fuel cell 51 generates power by causing the ethanol 22, which is sucked up from the cartridge 23 through a conduit 32 and a filter 33 for removing bead debris by driving a pump 31, to react with the oxygen in the air. As a result of power generation, air (oxygen) is taken in and water is discharged at the cathode 52 side. This water is once absorbed into absorbing means such as cloth (not shown) and thereafter dissipated into the air. Also, as a result of the power generation, the ethanol 22 is taken in and carbon dioxide is discharged at the anode 53 side. The generated power is supplied to the circuit block 41, and then supplied as the power source to the pumps 25 and 31, the valve 26, the blower 28, and the microcomputer to drive and control them, as well as the shaver 1.

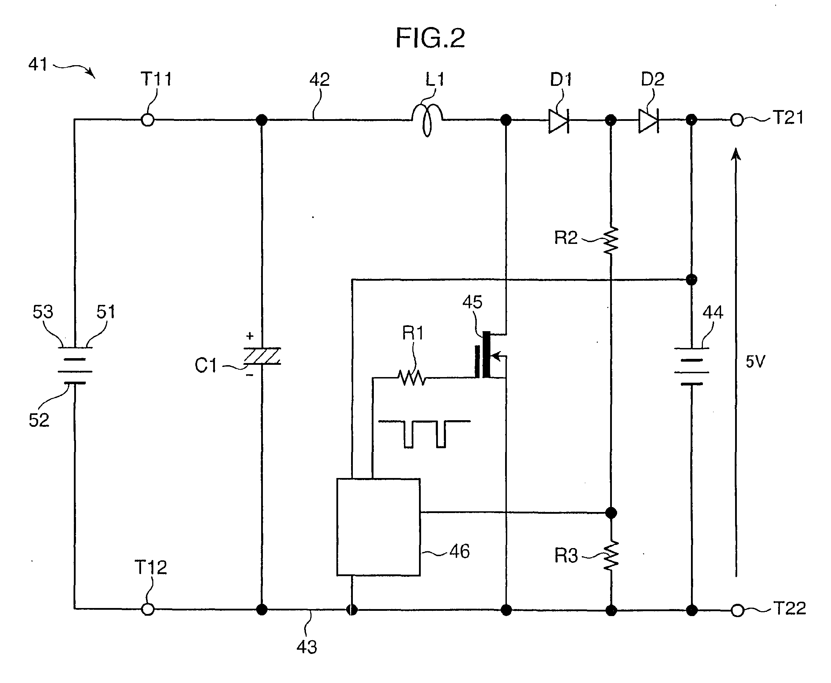

Figure 2 is a block diagram showing a configuration example of the aforementioned circuit block 41. In Figure 2, the anode 53 of the fuel cell 51 is connected to a high side input terminal T11, and cathode 52 is connected to a low side input terminal T12. A capacitor C1 is connected between those input terminals T11 and T12. This capacitor C1 constitutes an electricity accumulation part in the present embodiment. The capacitor C1 stabilizes unstable output voltage which varies depending on the reaction rate between the ethanol 22 and oxygen in the fuel cell 51, thereby making it usable as the power supply for the circuit block 41. When the fuel cell 51 is caused to generate power, the fuel cell 51 continuously generates power, and further the capacitor C1 stores the power which is left unused.

The aforementioned high side input terminal T11 is connected from a power supply line 42 to a high-side output terminal T21 via a choke coil L1 and 2-stage cascade-connected diodes D1 and D2. The aforementioned low-side input terminal T12 is connected to a low-side output terminal T22 through a power supply line 43. Between the output terminals T21 and T22, a secondary battery 44 is connected which accumulates and smoothes energy to output it. From the output terminals T21 and T22, power is supplied to the pumps 25, 31, the valve 26, the blower 28 and the microcomputer not shown as well as the shaver 1.

It is noted that if the shaver 1 and other loads share the secondary battery 44, the electric charge on the secondary battery 44 may be fully drained due to charging, and thus there may be an adverse effect on the next activation. If that is the case, a separate secondary battery may be provided by separating it with a diode, etc. Further, if the operable voltage of other load equipment is lower than the charging voltage of the shaver 1, it becomes possible to activate other load equipment by the secondary battery 44, even in a stage that the power generation of fuel cell 51 is finished and the charging to shaver 1 is finished. Further, by configuring such that the cartridge 23 is installed above the fuel cell 51 so that the ethanol 22 is manually caused to flow into the fuel cell 51 upon activation, it becomes possible to activate other load equipment by the fuel cell 51 without fail.

An FET 45 is interposed between the connecting point of a choke coil L1 and a diode D1, and a low-side power supply line 43. This FET 45 is ON/OFF driven by a PWM control circuit 46 through an activation resistance R1. The aforementioned PWM control circuit 46 is driven by the output voltage of the secondary battery 44. The aforementioned PWM control circuit 46 divides and takes in the voltage between the connecting point of the diodes D1 and D2 and the low-side power supply line 43 with resistors R1, R2 and controls the gate of the FET 45. Specifically, the PWM control circuit 46 turns the FET 45 ON with the gate of the FET 45 being brought to a high-level. As a result of this, energy from the fuel cell 51 is accumulated in the choke coil L1. Then, the PWM control circuit 46 causes the energy accumulated in the choke coil L1 to be released to the secondary battery 44 through the diodes D1 and D2 when turning the FET 45 OFF with the gate of the FET 44 being brought to a low level. The PWM control circuit 46 reads the peak voltage during that release via the resistors R2 and R3, and controls the ON duty of the FET 45 such that the peak voltage becomes a predetermined value. The circuit block shown in Figure 2 constitutes a boost circuit.

Thus, the circuit block shown in Figure 2 makes it possible to boost a very low voltage, for example, 0.5 to 0.8 V of the case in which power is generated through the reaction of the ethanol 22 and oxygen in the fuel cell 51, to a necessary voltage for cleaning, drying, charging as described above, for example, 5 V and output it. Therefore, two of the secondary batteries 44 are connected in series. It is also possible to use an electric double layer capacitor in place of the secondary battery 44. Similarly, an electric double layer capacitor may also be used for the built-in battery 12 of the shaver 1. Using the electric double layer capacitor will eliminate the degradation of the electricity accumulation part thereby making it maintenance free.

As so far described, in the shaver system S of the present embodiment, since the fuel cell 51 is provided as the power supply and the power thereof is used to drive the arrangement including at least the pump 25 and the valve 26 as well as the microcomputer for performing the cleaning, it becomes possible to eliminate the need of power supply wiring for the cleaner 2, thereby enabling to expand the selection range of the storage place of the shaver 1. As a result of this, the troublesomeness due to the power supply wiring is eliminated, thereby enabling to further improve convenience. Further, by using the wasted heat by the fuel cell 51 for the drying of blade edge 11, it is possible to increase the energy utilization efficiency of the fuel cell 51.

Further, using a heat pipe 30 in the heat transfer part form the fuel cell 51 to the blade edge 11 will enable to guide the wasted heat of the fuel cell 51 to the blade edge 11 in an effective manner. Further, since the fuel cell 51 utilizes the ethanol 22 similar to the cleaning liquid as a fuel, the number of kinds of consumable stores will not increase, and the replenishment thereof can be carried out at one time, it is possible to enhance the ease-of-use and to reduce the cost of the consumable stores (fuel and cleaning liquid).

Further, using ethanol 22 as the fuel and the cleaning liquid is advantageous in that its toxicity is lower than that of methyl alcohol and its acquisition becomes easier. Furthermore, ethanol has a larger calorific value and therefore is more suitable for the drying described above. In addition, while direct reaction of hydrogen and oxygen may pose a risk of explosion, using alcohol enables to increase the level of safety. Further, although the reaction of alcohol and oxygen is less effective than that of hydrogen and oxygen and produces a large amount of heat, by using that heat as the heat source during drying as described above, it is possible to increase the overall heat efficiency of the fuel cell 51 even though alcohol is used.

### [Embodiment 2]

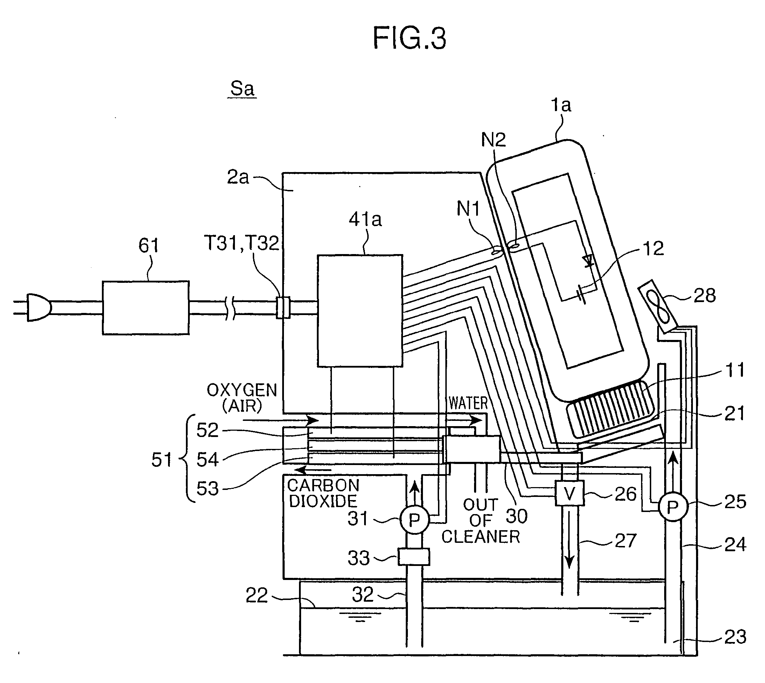

Figure 3 shows the configuration of the shaver system relating to a second embodiment of the present invention. This shaver system Sa is similar to the shaver system S shown in Figure 1 described above, and corresponding parts are given like reference symbols thereby omitting the description thereof.

It is noticeable in Figure 3 that in this shaver system Sa, a charge current is supplied in a non-contact manner to a shaver la from a circuit block 41a of a cleaner 2a, and receiving terminals T31 and T32 are provided in the housing of the cleaner 2a so that power can be supplied to the circuit block 41a from an AC adaptor 61 as well.

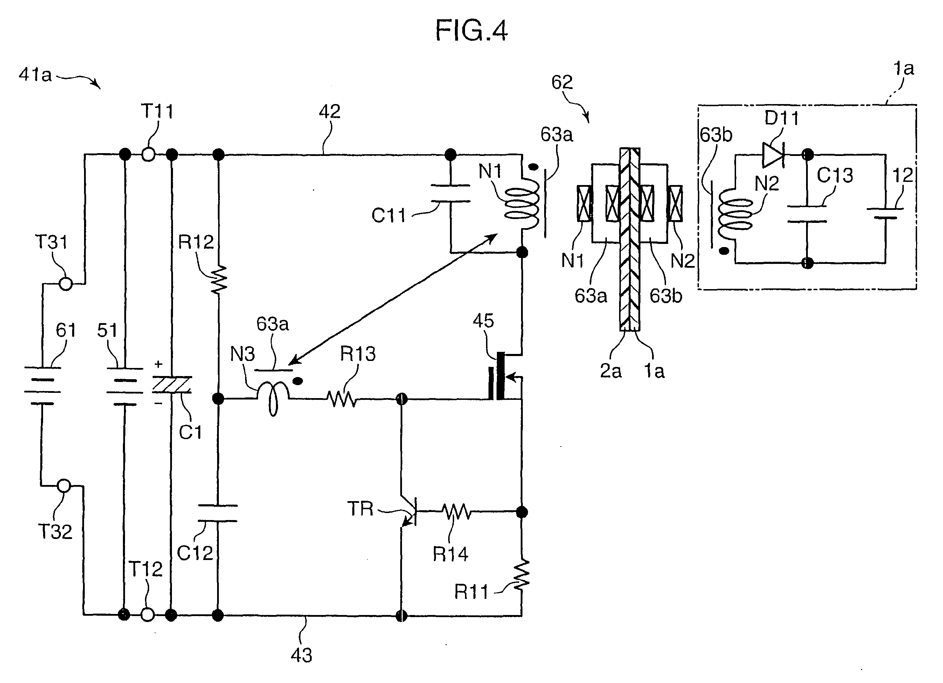

Figure 4 is a block diagram showing a configuration example of the aforementioned circuit block 41a. The circuit block 41a is similar to the circuit block 41, and corresponding parts are given like reference symbols thereby omitting the description thereof.

In Figure 4, first, between input terminals T11 and T12, an AC adaptor 61 is connected in parallel with the fuel cell 51 through power receiving terminals T31 and T32. The power receiving terminals T31 and T32 are detachable and the AC adaptor 61 can be connected to the cleaner 2a as needed.

A series circuit of a primary winding N1 of a transformer 62, the FET 45, and a current detection resistor R11 is connected between power supply lines 42 and 43 extending from the input terminals T11 and T12. A resonance capacitor C11 is connected in parallel to the primary winding N1. Further, a series circuit of an activation resistor R12 and a capacitor C12 is connected between the power supply lines 42 and 43, and connecting point thereof is connected to the gate of the FET 45 through an auxiliary winding N3 of the transformer 62 and a bias resistor R13. A control transistor TR is connected between the gate of the FET 45 and the low-side power supply line 43, and its base is connected through a resistor R14 to the connecting point of the FET 45 and the current detection resistor R11.

In the shaver 1a, a series circuit of a diode D11 and a capacitor C13 is connected to the both ends of the secondary winding N2 of the transformer 62. A built-in battery 12 is connected in parallel to the capacitor C13.

Therefore, the capacitor C12 is charged at a constant voltage by the current from the fuel cell 51 or the AC adaptor 61 through the activation resistor R12. When the gate of the FET 45 is turned to a high level by the charge voltage of the capacitor C12 through the auxiliary winding N3 and the bias resistor R13, and thereby the FET 45 is turned ON, the capacitor C11 causes the voltage between the terminals of the primary winding N1 to rise slowly and excitation energy is accumulated in the primary winding N1. The gate of the FET 45 is forwardly biased by the voltage induced by the auxiliary winding N3 of the transformer 62, and which is self-held. When the current flowing in the primary winding N1 becomes more than a predetermined value as a result of the FET 45 being turned ON, the control transistor TR is turned ON by the voltage across the terminals of the current detection resistor R11. As a result of this, the gate of the FET 45 is brought into a low level causing the FET 45 to go OFF; and the energy accumulated in the primary winding N1 is released from the secondary winding N2 and is rectified and smoothed by the diode D11 and the capacitor C13, thereby causing the built-in battery 12 to be charged.

Thus, in the configuration in which the shave la is charged by being boosted using the transformer 62 by the switching of the FET 45, as shown in Figure 4, an annular core 63 of the transformer 62 is divided into portions 63a, 63b of the cleaner 2a side and the shaver 1a side. These portions 63a, 63b have a longitudinal section of a 'U' shape. The windings N1 and N2 are wound at the center of the U shaped portions 63a and 63b, and the end faces thereof are oppositely faced so that a magnetic circuit is formed. As a result of this, it is possible to supply a charging current from the primary winding N1 of the cleaner 2a side to the secondary winging N2 of the shaver 1a side in a non-contact manner without using electrical contacts. Thereby, it becomes possible not only to eliminate poor contacts, but also to improve the resistance to static electricity thereby eliminating the risk of the ethanol 22 used as a fuel being ignited.

Further, since it is also made possible to supply power as needed from the detachable AC adaptor 61 to the cleaner 2a through the power receiving terminals T31 and T32, the charging of the shaver 1a can be carried out even when the fuel of the fuel cell 51, such as the ethanol 22 runs out. Also, when not necessary, the AC adaptor 61 may be detached so that the troublesomeness due to the power supply wiring will not become a problem. Further, when cleaning is performed by the power from the AC adaptor 61, the cartridge 23 is configured such that the space for retaining the ethanol 22 is divided into two sections: one for fuel and one for cleaning so that as the section for fuel is emptied, water is retained in the section for cleaning, thereby making it possible to perform cleaning with water without affecting the fuel cell 51. Furthermore, the cleaner 2a may be configured by the microcomputer etc. such that when water is retained in the entire cartridge 23, the pump 31 will not be driven.

### [Embodiment 3]

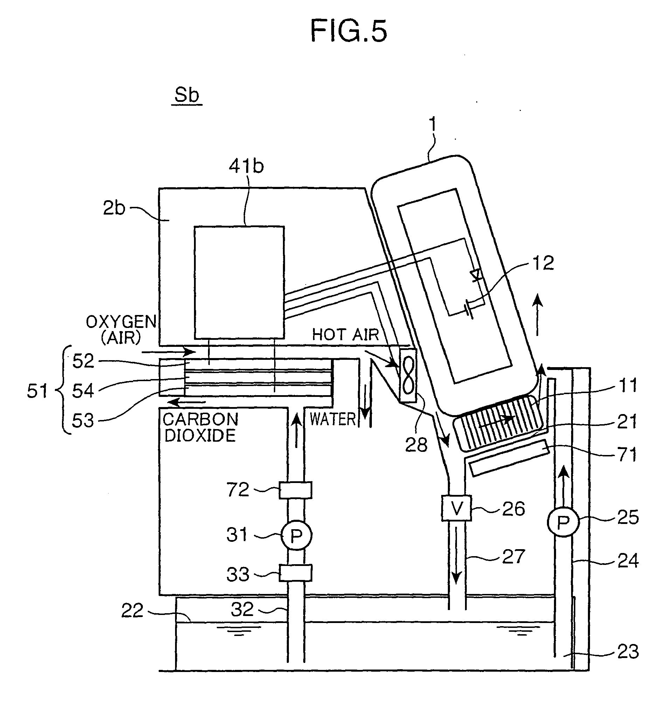

Figure 5 shows the configuration of the shaver system relating to a third embodiment of the present invention. This shaver system Sb is similar to the shaver system S shown in Figure 1 described above, and corresponding parts are given like reference symbols thereby omitting the description thereof.

It is noticeable in Figure 5 that in this shaver system Sb, the heat generated at the fuel cell 51 in the cleaner 2b is transferred to the blade edge 11 of the shaver 1 by a blower 28. Therefore, this blower 28 constitutes a heat transfer part and a drying part, as well as is provided between the fuel cell 51 and the shaver 1. This blower 28 will function as a blower for dying the blade edge 11, as well as function as a blower for releasing the heat and for sucking oxygen (air) for the power generation part of the fuel cell 51. That is, the blower 28 has both the blowing function for drying the blade edge 11 of the shaver 1 and the blowing function for releasing heat form the power generation part of the fuel cell 51. Thus, it is possible to reduce cost by sharing the blower 28.

Further, it is noticeable in the present embodiment that a heater 71 is provided on the back side of the cleaning pan 21. The heater 71 constitutes a heating part, and is adapted to heat the blade edge 11 through induction heating, resistance heating, and the like (Figure 5 shows an example of induction heating) by utilizing the power from the fuel cell 51 as is, when the wasted heat by the fuel cell 51 is insufficient. Therefore, even if the amount of power generation of the fuel cell 51 for charging is small when the shaver 1, which is in a state of near full charge, is set, it is possible to generate enough heat to dry the shaver 1 sufficiently.

Furthermore, it is noticeable in the present embodiment that a flow meter 72 is provided in the path for suction of fuel ethanol 22 by the pump 31 so that the injection rate of the ethanol 22 is regulated to adjust the amount of power generation.

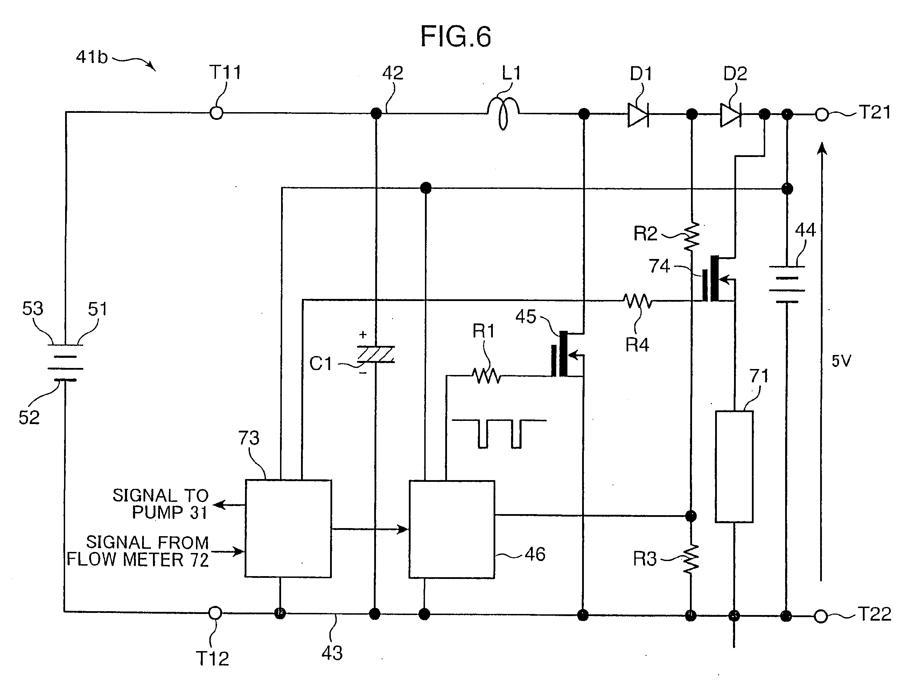

Figure 6 is a block diagram showing a configuration example of the aforementioned circuit block 41b. The circuit block 41b is similar to the aforementioned circuit block 41, and corresponding parts are given like reference symbols thereby omitting the description thereof.

In Figure 6, a series circuit of a heater 71 and an FET 74 is connected in parallel with a secondary battery 44 between output terminals T21 and T22. The gate of the FET 74 is connected to a microcomputer 73 through a resistor R4.

The output from the flow meter 72 is inputted to the microcomputer 73. The microcomputer 73 drives a pump 31 by outputting a control signal to the pump 31 until the flow rate to be inputted becomes a necessary amount for the power generation of this time. In this respect, when cleaning, drying and charging are performed in a series of operations, the pump 31 may continuously driven so that a necessary amount of ethanol 22 is lifted up in a lump-sum to a reservoir tank (not shown) and this lifted ethanol 22 is slowly supplied by gravity-drop to the fuel cell 51. Alternatively, the pump 31 may be driven intermittently and controlled such that the amount to be consumed at the fuel cell 51 is successively replenished and the total of the replenishment amount will be the necessary amount for the power generation of this time as mentioned before. It is noted that all of the ethanol 22 supplied reacts with oxygen to be used for power generation, and an excess amount of power is charged to the secondary cell 44.

Further, the microcomputer 73 communicates with the shaver 1 through a communication path not shown and when the shaver 1 becomes fully charged within a relatively short time, the microcomputer 73 turns the FET 74 ON through the resistor R4 to drive the heater 71 to make up the shortfall of the amount of heat from the fuel cell 51 for drying the blade edge 11. While driving of such load is required, the microcomputer 73 drives the PWM control circuit 46 to oscillate for boosting.

### [Embodiment 4]

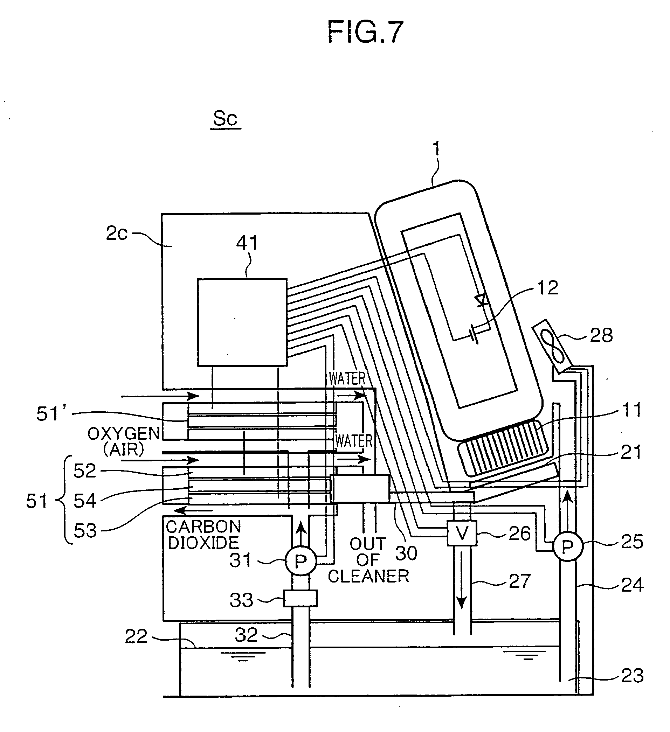

Figure 7 shows the configuration of the shaver system relating to a fourth embodiment of the present invention. This shaver system Sc is similar to the shaver system S shown in Figure 1 described above, and corresponding parts are given like reference symbols thereby omitting the description thereof.

It is noticeable in Figure 7 that in this shaver system Sc, multiple stages of the fuel cells 51 (two stages including fuel cell 51 and fuel cell 51' in Figure 7) are connected in series. Such configuration enables to decrease the boosting magnification.

Although the present specification has disclosed various embodiments as describe above, principal inventions among those are summarized below.

The shaver cleaner relating to the first embodiment is a cleaner wherein a shaver mounted to a predetermined mounting location is cleaned by a cleaning part and is heated and dried by a drying part, the cleaner comprising: a fuel cell for supplying power to at least the aforementioned cleaning part; and a heat transfer part for guiding the heat by the fuel cell to the drying part. Alternatively, the shaver cleaner comprises a cleaning part for cleaning a shaver mounted to a predetermined mounting location, a drying part for heating and drying the shaver mounted to the aforementioned mounting part, a fuel cell for supplying power to at least the aforementioned cleaning part, and a heat transfer part for guiding the heat by the aforementioned fuel cell to the aforementioned drying part.

According to the aforementioned configuration, the cleaning part cleans a blade edge etc. of the shaver mounted to a predetermined mounting location, such as by circulating a cleaning liquid such as alcohol etc. Then, in a cleaner in which the drying part performs drying by heating, a fuel cell is provided as a power supply; the fuel cell supplies power to at least the aforementioned cleaning part; and the heat such as the wasted heat thereof is guided to the aforementioned drying part by a heat transfer part and is used as a heat source for heating the aforementioned blade edge, etc. When an electric power load such as a blower is provided in the drying part, the aforementioned fuel cell may supply power to the blower as well. Further, the power from the fuel cell may be used for charging the shaver.

Thus, it is possible to eliminate the need of power supply wiring for the cleaner which can expand the selection range of the storage place of the shaver, thereby eliminating the troublesomeness due to the power source wiring and further enhancing convenience. Further, as a result of the heat such as wasted heat by the fuel cell being used for drying in the drying part, it is possible to increase the energy utilization efficiency of the fuel cell.

Further, the shaver cleaner relating to the second embodiment is a shaver cleaner relating to the first embodiment in which the aforementioned heat transfer part is a heat pipe.

According to the aforementioned configuration, the heat in the fuel cell can be effectively guided to the drying part.

Further, the shaver cleaner relating the third embodiment is the shaver cleaner relating to the first embodiment in which the aforementioned heat transfer part is a blower and has both a blowing function for drying the blade edge of the shaver in the aforementioned drying part and a blowing function for releasing the heat from the power generation part of the aforementioned fuel cell.

According to the aforementioned configuration, it is possible to reduce the cost by sharing the blower.

Further, the shaver cleaner relating to the fourth embodiment is the shaver cleaner relating to any one of embodiments 1 to 3, in which the aforementioned fuel cell uses alcohol as fuel, the alcohol is caused to react with oxygen in the air to generate electricity, and the alcohol is of the similar kind to the alcohol which is used as the cleaning liquid by the aforementioned cleaning part.

According to the aforementioned configuration, since the same alcohol can be used both for the fuel of the fuel cell and for the cleaning liquid of the cleaning part, the number of kinds of consumable stores will not increase, and the replenishment thereof can be carried out at one time, it is possible to enhance the ease-of-use. Moreover, it is possible to reduce the cost of the aforementioned consumable stores (fuel and cleaning liquid).

Further, the shaver cleaner relating to the fifth embodiment is the shaver cleaner elating the fourth embodiment, in which the aforementioned alcohol is ethanol.

According to the aforementioned configuration, by using ethyl alcohol compared with methyl alcohol, the toxicity thereof will be lower and the acquisition thereof will become easier. Moreover, ethanol has a larger calorific value and therefore is more suitable for the drying described above

Further, the shaver cleaner relating to the sixth embodiment is the shaver cleaner relating to any one of embodiments 1 to 3, comprising power receiving terminal for receiving power from an AC adaptor, in which power can be supplied from the receiving terminal to at least the aforementioned cleaning part.

According to the aforementioned configuration, even when fuel of the fuel cell such as the aforementioned ethanol runs out, water etc. can be used to carry out cleaning by the power from the AC adaptor, and when the shaver is being charged by the power from the fuel cell, the charging can also be carried out by the power from the AC adaptor. Further, when not necessary, the aforementioned AC adaptor may be detached so that the troublesomeness due to he power wiring will not become a problem.

The shaver cleaner relating to the seventh embodiment is the shaver cleaner relating to any one of embodiments 1 to 6, in which the aforementioned drying part further comprises a heating part which is power-supplied by the aforementioned fuel cell and heats the aforementioned shaver when the heat by the aforementioned fuel cell is insufficient.

According to the aforementioned configuration, in a drying part which dries blade edge etc. of a shaver by utilizing the heat such as the wasted heat by the fuel cell through the heat transfer part as described above, when charging of the shaver is performed by the fuel cell and the heat such as the wasted heat at that time as well is utilized for drying, the amount of power generation for charging by the fuel cell is small when the a shaver which is nearly full charged is set, and the heat such as wasted heat sufficient for drying the shaver may not be generated. Then a heating part is provided in the drying part so that heating part heats through induction heating, resistance heating, and the like by utilizing the power from the fuel cell as it is.

Therefore, when shaver is dried utilizing even the wasted heat during charging, it is possible to sufficiently dry the shaver regardless of the amount of remaining charge of the shaver.

Further, the shaver cleaner relating to the eighth embodiment is the shaver cleaner relating to any one of embodiments 1 to 7, further comprising an electricity accumulation part relating to the aforementioned fuel cell.

According to the aforementioned configuration, since the amount of power generation of the fuel cell is unstable, by providing a secondary battery, an electric double layer capacitor, and the like, it becomes possible to stably supply power. Further, when generating power, it is also possible to continuously generate power and cause the power which is left unused to be stored.

The shaver cleaner relating to the ninth embodiment is the shaver cleaner relating to the eighth embodiment, in which the aforementioned electricity accumulation part is an electric double layer capacitor.

According to the aforementioned configuration, the degradation of the electricity accumulation part is almost eliminated thereby making it maintenance free.

Further, the shaver system relating to the tenth embodiment comprises a shaver cleaner according to any one of embodiments 1 to 9 in conjunction with a shaver, and further comprises a boosting circuit for boosting the output voltage of the aforementioned fuel cell by using a transformer to supply a charge current to the aforementioned shaver, wherein a primary winding of the aforementioned transformer is placed in the cleaner and a secondary winding is placed in the shaver so that the charge current is supplied in a non-contact manner.

According to the aforementioned configuration, the boosting circuit boosts the output voltage of the fuel cell by using the transformer for example by switching the direct-current output voltage and thereafter supplies a charge current to the shaver. As a result of this, it becomes possible to charge the shaver even if the output voltage of the fuel cell is low. Thus, since a transformer is used, the primary side and the secondary side of the transformer become separable, and as a result of the primary winding of the transformer being placed in the cleaner and the secondary winding being placed in the shaver, it becomes possible to supply a charge current between them in a non-contact manner.

Therefore, it is possible to supply a charge current without using electrical contacts, and it becomes not only possible to eliminate contact failures, but also to improve the resistance to static electricity thereby eliminating the risk of the fuel such as the alcohol being ignited.

In order to represent the present invention, although the present invention has so far been described appropriately and sufficiently through embodiments with reference to drawings, those skilled in the art should recognize that modifications and/improvements can be easily made to the above described embodiments. Therefore, the modifications or improvements made by those skilled in the art are construed to be included within the scope of the relevant claims as long as they do not deviate from the scope of the claims.

### Industrial Applicability

According to the present invention, it is possible to provide a shaver cleaner and a shaver system utilizing a fuel cell.

## Claims

1. A shaver cleaner in which a shaver mounted to a predetermined mounting location is cleaned by a cleaning part and is dried with heat by a drying part, said shaver cleaner being **characterized by** comprising:
a fuel cell for supplying power to at least said cleaning part; and
a heat transfer part for guiding the heat from said fuel cell to said drying part.

2. The shaver cleaner according to claim 1, **characterized in that**
said heat transfer part is a heat pipe.

3. The shaver cleaner according to claim 1, **characterized in that**
said heat transfer part is a blower and has both a blowing function for drying the blade edge of the shaver in said drying part and a blowing function for releasing the heat from the power generation part of said fuel cell

4. The shaver cleaner according to any one of claims 1 to 3, **characterized in that**
said fuel cell uses alcohol as fuel, the alcohol is caused to react with oxygen in the air to generate electricity, and the alcohol is of the similar kind to the alcohol which is used as the cleaning liquid by said cleaning part.

5. The shaver cleaner according to claim 4, **characterized in that**
said alcohol is ethanol.

6. The shaver cleaner according to any one of claims 1 to 3, **characterized by** comprising:
a power receiving terminal from an AC adaptor, wherein power can be supplied from the power receiving terminal to at least the aforementioned cleaning part.

7. The shaver cleaner according to any one of claims 1 to 6, **characterized in that**
said drying part is power supplied by said fuel cell, and further comprises a heating part for heating said shaver when the heat from said fuel cell is insufficient.

8. The shaver cleaner according to any one of claims 1 to 7, **characterized by** further comprising
an electricity accumulation part relating to said fuel cell.

9. The shaver cleaner according to claim 8, **characterized in that**
said accumulation part is an electric double layer capacitor.

10. A shaver system comprising a cleaner according to any one of claims 1 to 9 in conjunction with a shaver, **characterized by** further comprising
a boosting circuit for boosting the output voltage of said fuel cell by using a transformer to supply a charge current to said shaver, wherein a primary winding of said transformer is placed in the cleaner and a secondary winding is placed in the shaver so that the charge current is supplied in a non-contact manner.
